# EUROPEAN PATENT SPECIFICATION

(11) **EP 4 422 818 B1**
(45) Date of publication and mention of the grant of the patent: **31.12.2025**
(21) Application number: 22800842.1
(22) Date of filing: 12.10.2022
(51) Int. Cl.: B23K 9/028, B23K 9/167, B23K 9/32, B23K 37/053

(54) **ORBITAL WELDING HEAD FOR WELDING THE JOINTS OF TUBES OF TUBE PLATES OF HEAT EXCHANGERS WITH A ROTATING JOINT HAVING FLEXIBLE BLADES**
ORBITALSCHWEISSKOPF ZUM SCHWEISSEN DER VERBINDUNGEN VON ROHREN VON ROHRPLATTEN VON WÄRMETAUSCHERN MIT EINER DREHVERBINDUNG MIT FLEXIBLEN SCHAUFELN
TÊTE DE SOUDAGE ORBITALE POUR SOUDER LES JOINTS DE TUBES DE PLAQUES DE TUBES D'ÉCHANGEURS DE CHALEUR AVEC UN JOINT TOURNANT À LAMES SOUPLES

(30) Priority: 26.10.2021 IT 202100027401
(43) Date of publication of application: 04.09.2024
(73) Proprietor: Maus Italia S.P.A., 26010 Bagnolo Cremasco (CR) (IT)
(72) Inventor: PALADIN, Flavio, 26013 Crema (IT)
(74) Representative: Mari, Marco Giovanni
(86) International application number: PCT/IT2022/050274
(87) International publication number: WO 2023/073739

(56) References cited:
- JP-A- H1 092 496
- US-A- 4 142 084
- US-A1- 2013 134 134

## Description

### Technical field

The invention is directed at the mechanical engineering industry field.

More in detail, the invention concerns an orbital welding head for welding tubes to tube plates of heat exchangers, see claim 1.

A very important field of use for orbital welding is that of heat exchangers provided internally with perforated tube plates to which tube bundles that can be made of materials ranging from carbon steel to stainless steels, to nickel alloys, to titanium when maximum resistance to corrosion is required, must be welded.

In orbital welding processes, the welding head is rotated mechanically around the tube through 360° and beyond, in a continuous process.

Tube-plate orbital welding is almost always performed using TIG *(Tungsten Inert Gas)* technology, which uses non-consumable tungsten electrodes, without or with the use of filler wire, if necessary.

The single-phase current used can reach values of up to 200-300 A, based on the operating conditions.

### Background art

The main components of a system for TIG orbital welding of tubes of automated type are: a generator with programming control, an orbital welding head, a cooling system, a supply line of an inert gas to shield the weld, and, where required, a filler wire feeder.

The orbital welding head substantially comprises: an electrode holder welding torch, a stop system for said torch against the tube plate, supply lines of pressurized technical gases to shield the melt bath of the weld, a supply line of a welding direct current.

Possible other components of a conventional orbital welding head are an integrated wire drive system, rotating with the electrode holder torch, a supply line of a coolant for the torch and, in the case of manual orbital heads, an expanding centring tool to block said welding torch at one of said tubes.

An example of an orbital welding head for welding tubes to tube plates by TIG or plasma process with or without filler metal is known from the document US 4 142 084 A (describing the preamble of claim 1).

The electrode holder welding torch, and the possible integrated wire drive system, are normally mounted on a rotating joint.

The rotating joint has the function of transmitting, in endless rotation, the welding current, the coolant of the electrode holder torch, in supply and return, two communication lines for an inert gas to shield the melt bath of the weld, and the passage in continuous rotation of a filler wire guide sheath.

Said rotating joint comprises, according to the prior art:
- a hollow fixed distributor body, complete with separate channels for conveying a coolant for welding, technical gases, and a supply line of a welding current;
- a rotating shaft;
- a bush, comprising an external thread adapted to cooperate with a corresponding internal thread of said fixed distributor body, adapted to be fitted on said rotating shaft and provided internally with elastic means adapted to ensure, once the joint is assembled, contact between said fixed distributor body and said rotating shaft.

To ensure said contact through said elastic means, normally an elastic grid with flexible blades is used, interposed between said bush and said rotating shaft, adapted to ensure contact between them and transfer of the welding current from said fixed distributor body to said shaft.

**In** bushes of conventional type, normally used for non-rotating contacts, but currently also used on welding heads, said elastic grid comprises a plurality of flexible blades, connected to one another at their ends by means of two rings.

Detrimentally, said flexible blades are shaped like an arch between the two rings that connect them, narrowing the hole for said rotating shaft to pass through.

The blades, after being elastically deformed for insertion of the rotating shaft into the bush, ensure the physical contact between the components only for a limited portion of their surface, substantially the more arched central portion, while contact is not guaranteed in proximity to the ends connected to the rings.

**In** fact, the bush-elastic grid pair is not designed and produced for the transmission of current on rotating shafts, but only for non-rotating single phase couplings.

**In** fact, application to orbital welding heads isa use that, although serving the purpose, has limits and disadvantages.

The arched shape of the blades creates problems in the event of inversion of rotation of the shaft, a condition that occurs at each welding cycle in orbital welding of the tube to the tube plate.

Moreover, the sliding part of the blades that ensures passage of the current is dense but also very thin (around 0.20 - 0.25 mm) and hence not sturdy also to mechanical stresses.

The main problem encountered is the poor reliability and uniformity of behaviour: some examples have show, even only after short periods of use, conditions compromised to the extent that the welding operation must be suspended to replace the part, or even the complete rotating joint, as it is also completely unusable.

Even minimum deterioration of the blades no longer ensures continuous contact between fixed distributor body and rotating shaft and causes unwanted phenomena, such as electric shocks and micro lightning strikes.

At the first signs of failure and deterioration of the contact blades, during striking of the welding arc, which takes place for very short times but reaching high voltages, even of 10000 Volts, micro strikes occur, creating craters and deposits of material on the rotating shaft in the sliding area of the bush.

Due to magnetic attraction, the deteriorated material of the rotating shaft deposits on the elastic grid making the contact surface no longer smooth and homogeneous, paving the way for further and more rapid deterioration of the bush-electric grid conductor system.

### Presentation of the invention

The invention proposes to overcome these limits, by defining an orbital welding head for welding tubes to tube plates of heat exchangers that ensures precise welding, is efficient, safe, and easy and inexpensive to maintain.

A particular object of the invention is to produce an orbital welding head that allows transmission of the welding current, in endless rotation, to the electrode holder torch, overcoming the drawbacks mentioned above.

These objects are achieved with an orbital welding head for welding tubes to tube plates of heat exchangers as defined in claim 1, the orbital welding head comprising, operatively connected to each other:
- an electrode holder welding torch;
- supply lines for a welding current and technical gases;
- a rotating joint comprising a hollow fixed distributor body, a bush, comprising an external thread adapted to cooperate with a corresponding internal thread of said fixed distributor body, adapted to be fitted on a rotating shaft, and a plurality of flexible blades adapted to deform elastically to ensure the contact and transmission of the welding current from said fixed distributor body to said rotating shaft, characterized in that said flexible blades each comprise a first and second end, where each first end protrudes axially from said bush and each second end is free, so as to be cantilevered with respect to said bush to elastically clamp said rotating shaft, and said bush comprises a frusto-conical crown comprising said flexible blades.

In particular, said frusto-conical crown comprises an external taper of an angle α and an internal taper of an angle β opposite each other.

Advantageously, said angle α is greater than said angle β.

Preferably, the internal surface of said frusto-conical crown is ground.

According to a possible embodiment, the minimum internal diameter of said frusto-conical crown is less than the minimum internal diameter of said bush.

Furthermore, said flexible blades comprise a variable thickness decreasing from said first to said second end.

In a preferred variant, said flexible blades are sixteen in number.

According to a further aspect of the invention, the edges of each second end of said flexible blades are rounded.

Preferably, said bush comprises a bronze-aluminium alloy.

The invention has numerous advantages described below.

The main advantage of the invention consists in achieving a continuous and uniform contact between the fixed distributor body, in which the supply line of the welding current is coupled, and the rotating shaft positioned inside it, which must in turn transfer the welding current to the various components of the welding head.

Unlike the prior art, in which the bush requires further elastic means to promote physical contact between distributor body and shaft, i.e., the elastic grid, in the solution of the invention it is the bush itself that performs this task, being in one piece and suitably shaped.

The flexible blades that protrude from it and which define a frusto-conical crown clamp the rotating shaft uniformly along the whole of its surface, ensuring continuous and definite sliding between the rotating shaft and the distributor body through the bush, throughout the operation of the welding head.

The frusto-conical shape of said crown, and the thinning of the flexible blades that form it, thinner at their second free end, ensure a uniform pressure of these blades on the contact surface of the rotating shaft.

The internal taper of the crown ensures perfect parallelism of the elastic blades, once elastically deformed, with respect to the surface of the rotating shaft, when the latter is coupled in the bush, ensuring an extended and total contact surface, unlike the case of the prior art where the contact is only ensured in the arched central portion of the blades.

Moreover, due to grinding of the internal surface of the frusto-conical crown, which is therefore perfectly flat, a better adhesion between bush and rotating shaft and an even better passage of current are obtained.

**In** general, the current transmission surface is greatly increased with respect to conventional solutions and this ensures a lower unit pressure of the blades on the rotating shaft, in this way advantageously reducing the degree of wear over time of the contact surfaces.

The greater contact surface between blades and rotating shaft reduces the amount of current transmitted per surface unit, allowing passage of very high amperage currents, up to 800 A.

Rounding of the edges of the second free end of the blades eliminates any burrs or machining imperfections that can compromise or damage the sliding surface of the rotating shaft.

### Brief description of the drawings

The advantages of the invention will be more apparent below, in the description of a preferred embodiment, provided by way of nonlimiting example, and with the aid of the figures, wherein:
Fig. 1 illustrates, in a partially sectional side view, an orbital welding head for welding tubes to tube plates of heat exchangers according to the invention;
Figs. 2 and 3 illustrate, in a side view and in a longitudinal section, a component of the welding head according to the invention;
Fig. 4 illustrates, in an exploded axonometric view, the component of Fig. 2;
Figs. 5, 6, 7 and 8 illustrate, respectively in an axonometric view, in a side view, in a front view and in a longitudinal section, a bush according to the invention;
Fig. 9 illustrates a detail of Fig. 7.

### Detailed description of a preferred embodiment of the invention

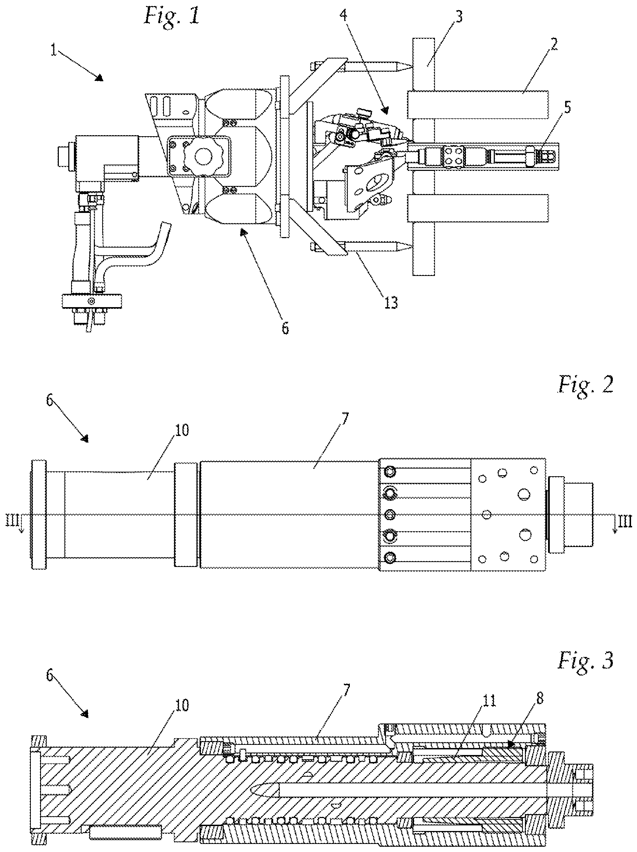

With particular reference to Fig. 1, an orbital welding head 1 with TIG technology for welding tubes 2 to tube plates 3 of heat exchangers, is illustrated.

Said orbital welding head 1 is, by way of example, a manual welding head and is operated by an operator, although the features claimed and the advantages obtained can be applied equally to an automatic welding head.

Said orbital welding head 1 essentially comprises:
- an electrode holder welding torch 4;
- a stop system with tips 13 for said torch 4 against a tube plate 3;
- an expanding centring tool 5 to block said welding torch 4 at one of said tubes 2 to be welded;
- an integrated wire drive system;
- a supply line of a coolant for said electrode holder welding torch 4;
- a supply line of an inert technical gas, used as gas for shielding the weld;
- a supply line of a welding current;
- a rotating joint 6 on which said electrode holder torch 4, said centring tool 5, said integrated wire feed system are mounted, and in which said supply line of a welding current is also coupled.

With particular reference to Figs. 2, 3 and 4, said rotating joint comprises:
- a hollow fixed distributor body 7 connected to said supply line of a welding current;
- a rotating shaft 10 located inside said fixed distributor body 7, which in use is adapted to transmit its rotation at least to said electrode holder torch 4;
- a bush 8 interposed between said fixed distributor body 7 and said rotating shaft 10.

Said bush 8 comprises an external thread 9 adapted to cooperate with a corresponding internal thread of said fixed distributor body 7 so as to be integral therewith; said rotating shaft 10 is instead free to rotate inside said bush 8.

Said rotating joint 6 further comprises a plurality of flexible blades **11,** which in fact belong to said bush 8, and which act as contact means between the fixed distributor body 7 and the rotating shaft 10 to allow passage of the welding current between the fixed part of the rotating joint 6 and the rotating shaft 10 (and accordingly then to the electrode holder welding torch 4).

Said flexible blades 11 each comprise a first 11' and second 11" end, where each first end 11' protrudes from an annular rim 8a of said bush 8 and each second end 11" is free, so as to be cantilevered with respect to said bush 8 to elastically clamp said rotating shaft 10 between them.

As mentioned above, said flexible blades 11 are adapted to deform elastically to ensure the contact and transmission of the welding current from said fixed distributor body 7 to said rotating shaft 10.

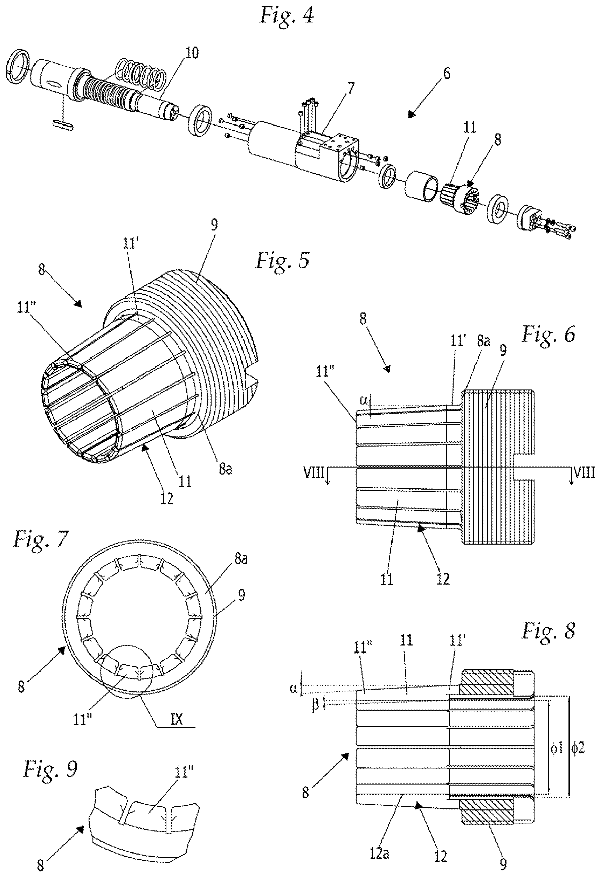

With particular reference to Figs. 5, 6, 7 and 8, said bush 8 comprises a frusto-conical crown 12 comprising said flexible blades 11. Said bush 8 and said frusto-conical crown 12 formed by said flexible blades 11 are in one piece.

Said flexible blades 11 have a substantially elongated shape and a variable thickness decreasing from said first 11' to said second 11" end, so that in fact the second cantilevered free end 11" of said blades 11 has a thickness that is less than the thickness of their opposite end 11' next (for coupling) to the bush 8.

Said frusto-conical crown 12 comprises an external taper of an angle α and an internal taper of an angle β opposite each other, where said angle α is greater than said angle β.

The minimum internal diameter ϕ1 of said frusto-conical crown 12 is less than the minimum internal diameter ϕ2 of said bush 8.

In particular, said bush 8 comprises a bronze-aluminium alloy that minimizes the resistance to passage of the electric current.

Bronze-aluminium alloys are characterized by their high aluminium content, which varies from 8.5% to 12%, often accompanied by iron, silicon, manganese or nickel.

Due to their excellent mechanical properties and optimum corrosion resistance, they are currently used in the marine sector or in mechanical applications subjected to particularly high loads and stresses.

For the particular application of the invention, excellent results were obtained with the use of the bronze-aluminium alloy commercially known with the number CC333G.

An orbital welding head 1 according to the invention and as described in detail above in the detail of some of its components ensures a minimum reliability of 100,000 orbital welding cycles, with currents of up to 500 A without exhibiting significant load losses due to friction and with negligible losses due to electric resistance during passage of the current.

## Claims

1. Orbital welding head (1) for welding tubes (2) to tube plates (3) of heat exchangers comprising, operationally connected to each other:
- an electrode holder welding torch (4);
- an expanding centring tool (5) to block said electrode holder welding torch (4) at one of said tubes (2) to be welded;
- supply lines for a welding current and technical gases;
- a rotating joint (6) on which said electrode holder torch (4) and said centring tool (5) are mounted, and in which said supply line of a welding current is also coupled,
the rotating joint (6) comprising a hollow fixed distributor body (7),
a bush (8) comprising an external thread (9) adapted to cooperate with a corresponding internal thread of said fixed distributor body (7) and adapted to be fitted on a rotating shaft (10), and a plurality of flexible blades (11) adapted to deform elastically to ensure the contact and transmission of the welding current from said fixed distributor body (7) to said rotating shaft (10),
**characterized in that** said flexible blades (11) each comprise a first (11') and a second (11") end, where each first end (11') protrudes axially from said bush (8) and each second end (11") is free, so as to be cantilevered with respect to said bush (8) to elastically clamp said rotating shaft (10), and said bush (8) comprises a frusto-conical crown (12) comprising said flexible blades (11).

2. Orbital welding head (1) according to claim 1, **characterized in that** said frusto-conical crown (12) includes an external taper of an angle (α) and an internal taper of an angle (β) opposite each other.

3. Orbital welding head (1) according to claim 2, **characterized in that** said angle (α) is greater than said angle (β).

4. Orbital welding head (1) according to claim 1, **characterized in that** the internal surface (12a) of said frusto-conical crown (12) is ground.

5. Orbital welding head (1) according to claim 1, **characterized in that** the minimum internal diameter (ϕ1) of said frusto-conical crown (12) is less than the minimum internal diameter (ϕ2) of said bush (8).

6. Orbital welding head (1) according to claim 1, **characterized in that** said flexible blades (11) comprise a variable thickness decreasing from said first (11') to said second (11") end.

7. Orbital welding head (1) according to claim 1, **characterized in that** said flexible blades (11) are sixteen in number.

8. Orbital welding head (1) according to claim 1, **characterized in that** the edges of each second end (11") of said flexible blades (11) are rounded.

9. Orbital welding head (11) according to claim 1, **characterized in that** said bush (8) comprises a bronze-aluminium alloy.

## Patentansprüche

1. Orbitalschweißkopf (1) zum Schweißen von Rohren (2) an Rohrplatten (3) von Wärmetauschern, die funktionsfähig miteinander verbunden Folgendes umfassen:
- einen Elektrodenhalter-Schweißbrenner (4);
- ein expandierendes Zentrierwerkzeug (5) zum Blockieren des besagten Elektrodenhalter-Schweißbrenners (4) an einem der besagten zu schweißenden Rohre (2);
- Versorgungsleitungen für Schweißstrom und technische Gase;
- ein Drehgelenk (6), an dem der besagte Elektrodenhalter-Brenner (4) und das besagte Zentrierwerkzeug (5) angebracht sind und an dem auch die besagte Versorgungsleitung des Schweißstroms angeschlossen ist,
wobei das Drehgelenk (6) einen hohlen, feststehenden Verteilerkörper (7) umfasst,
eine Buchse (8), umfassend ein Außengewinde (9), geeignet, mit einem entsprechenden Innengewinde des besagten feststehenden Verteilerkörpers (7) zusammenzuwirken und geeignet, auf eine Drehwelle (10) aufgesetzt zu werden, und eine Vielzahl flexibler Lamellen (11), geeignet, sich elastisch verformen können, um den Kontakt und die Übertragung des Schweißstroms vom besagten feststehenden Verteilerkörper (7) zur besagten Drehwelle (10) sicherzustellen,
**dadurch gekennzeichnet, dass** die besagten flexiblen Lamellen (11) jeweils ein erstes (11') und ein zweites (11") Ende umfassen, wobei jedes erste Ende (11') axial aus der besagten Buchse (8) hervorragt und jedes zweite Ende (11") frei ist, so dass es in Bezug auf die besagte Buchse (8) freitragend ist, um die besagte rotierende Welle (10) elastisch zu klemmen, und die besagte Buchse (8) umfasst eine kegelstumpfförmige Krone (12), umfassend die besagten flexiblen Lamellen (11).

2. Orbitalschweißkopf (1) gemäß Anspruch 1, **dadurch gekennzeichnet, dass** die besagte kegelstumpfförmige Krone (12) eine äußere Verjüngung eines Winkels (α) und eine innere Verjüngung eines Winkels (β) einschließt, die einander gegenüberliegen.

3. Orbitalschweißkopf (1) gemäß Anspruch 2, **dadurch gekennzeichnet, dass** der besagte Winkel (α) größer ist als der besagte Winkel (β).

4. Orbitalschweißkopf (1) gemäß Anspruch 1, **dadurch gekennzeichnet, dass** die Innenfläche (12a) der besagten kegelstumpfförmigen Krone (12) geschliffen ist.

5. Orbitalschweißkopf (1) gemäß Anspruch 1, **dadurch gekennzeichnet, dass** der minimale Innendurchmesser (ø1) der besagten kegelstumpfförmigen Krone (12) kleiner ist als der minimale Innendurchmesser (ø2) der besagten Buchse (8).

6. Orbitalschweißkopf (1) gemäß Anspruch 1, **dadurch gekennzeichnet, dass** die besagten flexiblen Lamellen (11) eine variable Dicke umfassen, die vom besagten ersten Ende (11') zum besagten zweiten Ende (11") hin abnimmt.

7. Orbitalschweißkopf (1) gemäß Anspruch 1, **dadurch gekennzeichnet, dass** die besagten flexiblen Lamellen (11) sechzehn an der Zahl sind.

8. Orbitalschweißkopf (1) gemäß Anspruch 1, **dadurch gekennzeichnet, dass** die Kanten jedes zweiten Endes (11") der besagten flexiblen Klingen (11) abgerundet sind.

9. Orbitalschweißkopf (1) gemäß Anspruch 1, **dadurch gekennzeichnet, dass** die besagte Buchse (8) eine Bronze-Aluminium-Legierung umfasst.

## Revendications

1. Tête de soudage orbitale (1) pour souder des tubes (2) à des plaques tubulaires (3) d'échangeurs de chaleur, comprenant, reliés fonctionnellement les uns aux autres :
- une torche de soudage à porte-électrode (4) ;
- un outil de centrage expansible (5) pour bloquer ladite torche de soudage à porte-électrode (4) sur l'un desdits tubes (2) à souder ;
- des conduites d'alimentation pour un courant de soudage et des gaz techniques ;
- un joint rotatif (6) sur lequel sont montés ladite torche de soudage à porte-électrode (4) et ledit outil de centrage (5), et dans lequel ladite conduite d'alimentation d'un courant de soudage est également couplée,
le joint rotatif (6) comprenant un corps de distributeur fixe creux (7), une douille (8) comprenant un filetage externe (9) adapté pour coopérer avec un filetage interne correspondant dudit corps de distributeur fixe (7) et adapté pour être monté sur un arbre rotatif (10), et une pluralité de lames flexibles (11) adaptées pour se déformer élastiquement afin d'assurer le contact et la transmission du courant de soudage dudit corps de distributeur fixe (7) audit arbre rotatif (10),
**caractérisée par le fait que** lesdites lames flexibles (11) comprennent chacune une première (11') et une seconde (11") extrémité, où chaque première extrémité (11') fait saillie axialement à partir de ladite douille (8) et chaque seconde extrémité (11") est libre, de manière à être en porte-à-faux par rapport à ladite douille (8) pour serrer élastiquement ledit arbre rotatif (10), et ladite douille (8) comprend une couronne tronconique (12) comprenant lesdites lames flexibles (11).

2. Tête de soudage orbitale (1) selon la revendication 1, **caractérisée par le fait que** ladite couronne tronconique (12) comprend un cône externe d'angle (α) et un cône interne d'angle (β) opposés l'un à l'autre.

3. Tête de soudage orbitale (1) selon la revendication 2, **caractérisée par le fait que** ledit angle (α) est supérieur audit angle (β).

4. Tête de soudage orbitale (1) selon la revendication 1, **caractérisée par le fait que** la surface interne (12a) de ladite couronne tronconique (12) est rectifiée.

5. Tête de soudage orbitale (1) selon la revendication 1, **caractérisée par le fait que** le diamètre interne minimal (ø1) de ladite couronne tronconique (12) est inférieur au diamètre interne minimal (ø2) de ladite douille (8).

6. Tête de soudage orbitale (1) selon la revendication 1, **caractérisée par le fait que** lesdites lames flexibles (11) ont une épaisseur variable qui diminue de ladite première (11') vers ladite seconde (11") extrémité.

7. Tête de soudage orbitale (1) selon la revendication 1, **caractérisée par le fait que** lesdites lames flexibles (11) sont au nombre de seize.

8. Tête de soudage orbitale (1) selon la revendication 1, **caractérisée par le fait que** les bords de chaque deuxième extrémité (11") desdites lames flexibles (11) sont arrondis.

9. Tête de soudage orbitale (11) selon la revendication 1, **caractérisée par le fait que** ladite douille (8) comprend un alliage bronze-aluminium.
